# FASCICULE DE BREVET EUROPEEN

(11) **EP 0 668 733 B1**
(45) Date de publication et mention de la délivrance du brevet: **02.01.1997**
(21) Numéro de dépôt: 93924107.1
(22) Date de dépôt: 25.10.1993
(51) Int. Cl.: A45B 3/00, A45B 23/00, A45B 25/00

(54) **DISPOSITIF DE PROTECTION CONTRE LA CHALEUR, TEL QU'OMBRELLE OU PARASOL DOTE D'UN SYSTEME DE VENTILATION A ENERGIE SOLAIRE**
HITZESCHUTZVORRICHTUNG, WIE SONNENSCHIRM, MIT EINEM SONNENENERGIEBETRIEBENEN BELÜFTUNGSSYSTEM
DEVICE FOR PROTECTION AGAINST HEAT, SUCH AS SUNSHADE OR PARASOL PROVIDED WITH A SOLAR ENERGY VENTILATION SYSTEM

(30) Priorité: 13.11.1992 FR 9213916
(43) Date de publication de la demande: 30.08.1995
(73) Titulaire: Guilhem, Christian, F-82350 Albias (FR)
(72) Inventeur: Guilhem, Christian, F-82350 Albias (FR)
(74) Mandataire: Cabinet BARRE LAFORGUE & associés
(86) Numéro de dépôt international: FR9301042
(87) Numéro de publication internationale: WO9410872

(56) Documents cités:
- DE-U- 8 505 328
- FR-A- 2 617 689
- US-A- 5 007 811

## Description

L'invention concerne un dispositif de protection contre la chaleur, tel qu'ombrelle ou parasol, doté d'un système de ventilation à énergie solaire.

Les objets tels que parasol ou ombrelle permettent de protéger les personnes se trouvant sous ces derniers du rayonnement direct du soleil. Toutefois, ils ne permettent pas à ces personnes de se protéger des effets de la chaleur, la température au niveau de la zone couverte par le parasol ou l'ombrelle étant sensiblement identique à la température ambiante.

Pour pallier cet inconvénient, il a été conçu, tel que décrit dans la demande de brevet française FR 2 617 689, une ombrelle dotée d'un ventilateur disposé vers la partie supérieure de cette dernière, et alimenté au moyen de cellules solaires disposées sur la toile de ladite ombrelle. Un tel système a pour vocation de créer un courant d'air permettant de rafraîchir l'utilisateur. Toutefois, il présente un inconvénient majeur résultant de l'agencement et de la disposition du système de ventilation qui amènent un fragilisation de l'ombrelle qui, dans la pratique, se révèle inapte à résister notamment lorsqu'elle est soumise à l'action du vent.

L'invention vise à pallier cet inconvénient et a pour principal objectif de fournir un objet tel qu'ombrelle ou parasol doté d'un système de ventilation à énergie solaire, et présentant la même solidité qu'une ombrelle ou parasol classique.

Un autre objectif de l'invention est de fournir un dispositif conçu de façon à éviter tout risque de blessure de l'utilisateur.

Un autre objectif de l'invention est de fournir un dispositif pouvant s'adapter sur une ombrelle ou un parasol classique en vue d'équiper ces derniers d'un système de ventilation.

Un autre objectif est de fournir un dispositif autorisant des réglages du débit et de la direction de l'air brassé.

A cet effet, l'invention vise un dispositif de protection tel qu'ombrelle ou parasol, comportant :
- un manche portant une toile de protection solidarisée sur des tiges flexibles et apte à se déployer et se replier sous l'effet de l'actionnement de baleines articulées respectivement sur lesdites tiges et sur un manchon monté coulissant le long du manche,
- au moins un capteur d'énergie solaire disposé sur la toile,
- un moteur électrique relié à chaque capteur en vue de son alimentation,
- et une hélice de ventilateur disposée sous la toile et agencée pour être entraînée en rotation par le moteur électrique,

Selon l'invention, ce dispositif se caractérise en ce que :
. le moteur est solidaire du manche et adapté pour entraîner en rotation un arbre moteur s'étendant au moins partiellement à l'intérieur dudit manche et comportant au moins un tronçon présentant un diamètre externe sensiblement inférieur au diamètre interne de ce manche,
. le manche est pourvu, dans une position intermédiaire entre la toile et les baleines, dans la position déployée de ces dernières, et en regard du tronçon de l'arbre moteur, de lumières aptes à loger des organes d'entraînement destinés à venir en contact avec ledit tronçon, de façon à être entraînés en rotation en sens inverse de ce dernier,
. l'hélice de ventilateur comporte une bague tournante porte-pales, disposée autour du manche en regard des organes d'entraînement, de façon à être entraînée en rotation par ces derniers, ladite bague étant associée à des moyens de blocage de sa translation par rapport au manche,
. le moteur, l'arbre moteur, les organes d'entraînement et la bague tournante sont accouplés de façon à former une chaîne de transmission débrayable sous l'action d'une force déterminée tendant à s'opposer à la rotation de l'hélice.

En premier lieu, un dispositif tel que parasol ou ombrelle selon l'invention ne se trouve pas fragilisé par rapport aux parasol ou ombrelle classiques car, de même façon que pour ces derniers, le manche est réalisé d'un seul tenant assurant la rigidité de l'ensemble et n'offrant aucun point de moindre résistance.

De plus, la conception des moyens de ventilation garantit contre tout risque d'accident. En effet, d'une part, l'hélice est positionnée entre la toile et les baleines, dans la position déployée de celles-ci, c'est-à-dire dans une zone située très près de la toile et protégée par les baleines. D'autre part et surtout, tout contact avec les pales visant à s'opposer à la rotation de ces dernières entraîne un arrêt de leur rotation si l'effort appliqué est supérieur à l'effort prédéterminé pour amener un débrayage de la chaîne de transmission. Or, le système entraînant le débrayage étant obligatoirement disposé à faible distance de l'axe de rotation, le débrayage peut être obtenu sous l'action d'une force relativement faible appliquée au niveau des pales, c est-à-dire à une distance très supérieure de cet axe de rotation.

Selon un premier mode de réalisation préférentiel de l'invention :
- le tronçon de l'arbre moteur, les organes d'entraînement et la bague tournante présentent des faces en regard présentant un état de surface adapté pour que l'entraînement en rotation desdits éléments soit du type positif,
- des moyens de débrayage sont disposés entre le moteur et l'arbre moteur.

Le système d'entraînement de type positif de ce mode de réalisation garantit une parfaite transmission du mouvement d'un bout à l'autre de la chaîne, c'est-à-dire du moteur jusqu'à la bague tournante.

En outre, la sécurité est également assurée grâce à l'interposition entre le moteur et l'arbre moteur de moyens de débrayage. Concernant ces derniers, ils peuvent être de tout type connu en soi, tel que notamment : deux aimants d'intensité d'aimantation donnés, deux platines présentant des ondulations radiales coopérant pour assurer la transmission du mouvement en rotation, un manchon solidaire du moteur et logeant l'extrémité de l'arbre moteur de façon à entraîner ce dernier en rotation sous l'effet des forces de frottement s'exerçant entre lesdits manchon et arbre moteur...

Selon un deuxième mode de réalisation préférentiel de l'invention, les organes d'entraînement sont constitués d'organes de roulement aptes à être entraînés en rotation par le tronçon, et à entraîner en rotation la bague tournante, sous l'effet des forces de frottement s'exerçant entre lesdits éléments.

Cette solution permet d'obtenir un débrayage automatique sans nécessiter de moyens spécifiques conduisant à ce débrayage. En effet, la transmission du mouvement de rotation se fait de façon intégrale tant que les efforts de frottement entre arbre moteur, organes de roulement et bague tournante sont supérieurs à un effort donné tendant à s'opposer à la rotation de l'hélice. Par contre, cette transmission cesse dès qu'un contact avec les pales engendre un effort supérieur aux efforts de frottement.

Selon une autre caractéristique de l'invention, le moteur est fixé sur le manche de façon à être disposé dans le prolongement d'un tronçon dudit manche s'étendant au-dessus de la toile, l'arbre moteur étant logé entièrement à l'intérieur du manche.

Par ailleurs, selon un mode de réalisation préférentiel, le moteur électrique peut être associé à un variateur de vitesse. Cette option permet par exemple de diminuer la vitesse de rotation lorsque l'énergie solaire fournie par les capteurs devient trop importante.

En outre, selon une autre caractéristique de l'invention, la bague tournante porte-pales est dotée de pales articulées sur ladite bague de façon à pouvoir être amenées, soit dans une position où elles s'étendent radialement par rapport au manche, soit dans une position où elles s'étendent parallèlement le long dudit manche.

Cette solution permet de replier entièrement le dispositif dans une position où son encombrement n'excède pas celui des dispositifs connus.

De plus, en vue de permettre de faire varier le débit et la direction de l'air brassé, chaque pale comporte, avantageusement, un axe longitudinal articulé sur la bague tournante, un élément formant pale doté d'un alésage longitudinal agencé pour loger l'axe, et des bagues à friction disposées autour de l'axe, à l'intérieur de l'alésage, et aptes à permettre de faire tourner l'élément de pale autour de son axe et de le maintenir dans toute position désirée.

Par ailleurs, selon une variante de réalisation, la bague tournante présente une face périphérique dotée d'encoches adaptées pour loger chacune une extrémité de pale, lesdites encoches et pales étant dotées de moyens d'encliquetage aptes à permettre un assemblage démontable.

Cette solution constitue une alternative à la solution de repliage des pales qui conduit elle aussi à un encombrement réduit du dispositif dans sa position de non utilisation.

En outre, en vue de permettre, selon cette variante, de modifier le débit et la direction de l'air brassé, la bague tournante présente, avantageusement, pour chaque pale, une pluralité d'encoches d'inclinaisons différentes par rapport à un axe vertical, aptes à permettre de modifier l'inclinaison des pales.

L'invention s'étend à un système de ventilation destiné à équiper sans grandes modifications un parasol ou une ombrelle actuelles. Selon l'invention, ce système comprend l'ensemble hélice de ventilateur, moyens de blocage de ladite hélice et moteur/arbre moteur/organes d'entraînement précités, pré-assemblé sur un tronçon de tube de diamètre sensiblement supérieur à un diamètre standard de manche de parasol ou d'ombrelle, ledit tronçon de tube comprenant deux colliers d'extrémité aptes à permettre d'interposer ledit tronçon de tube le long d'un manche de parasol après découpe d'une longueur dudit manche équivalant à celle du tronçon de tube.

D'autres caractéristiques, buts et avantages de l'invention ressortiront de la description détaillée qui suit en référence aux dessins annexés qui représentent à titre d'exemples non limitatifs :
- un mode de réalisation préférentiel et une variante de réalisation concernant le dispositif, parasol ou ombrelle, selon l'invention,
- un mode de réalisation préférentiel d'un système de ventilation conforme à l'invention destiné à équiper un parasol ou une ombrelle actuels.

Sur ces dessins qui font partie intégrante de la présente description :
- la figure 1 est une vue partielle avec une partie arrachée d'un parasol conforme à l'invention,
- la figure 2 est une coupe longitudinale partielle par un plan axial A et à échelle agrandie du manche de ce parasol,
- la figure 3 est une coupe transversale par un plan B, à échelle agrandie, du manche de ce parasol,
- la figure 4 est une vue schématique partielle, en perspective, d'une variante de réalisation de bague tournante d'un dispositif selon l'invention,
- la figure 5 est une vue partielle en coupe par un plan C de la bague tournante de la figure 4,
- et la figure 6 est une coupe longitudinale par un plan axial d'un système de ventilation conforme à l'invention équipant un parasol classique.

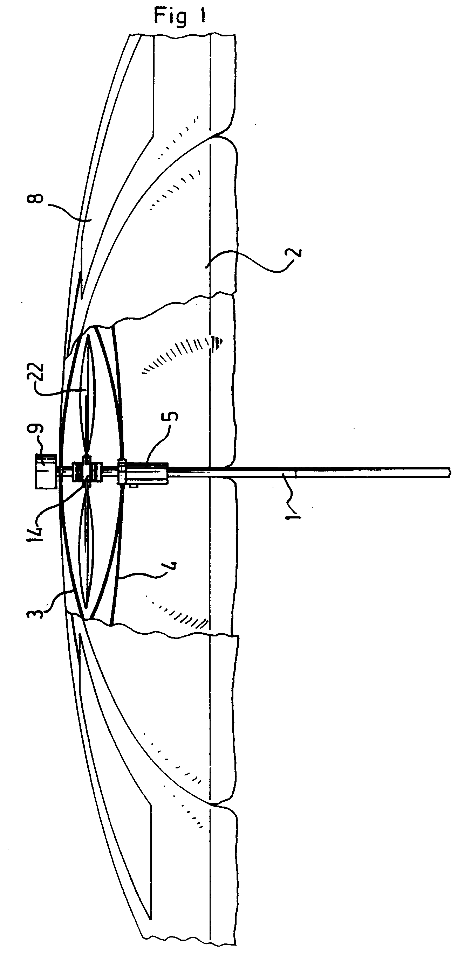

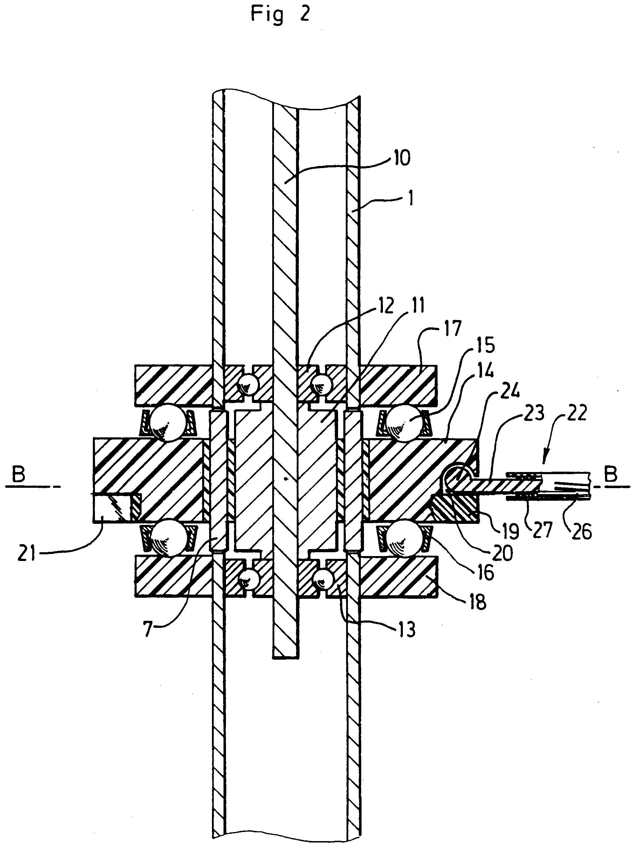

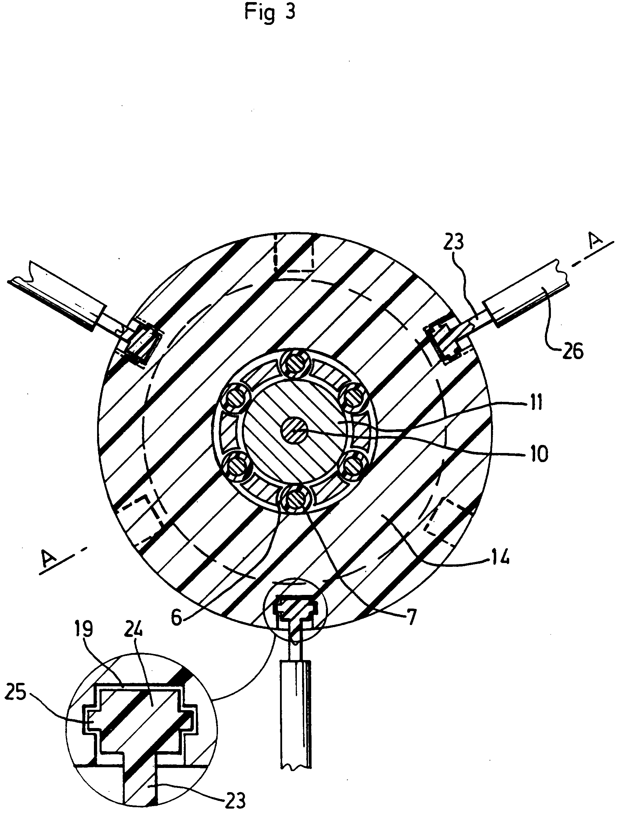

Le dispositif représenté à la figure 1 et partiellement aux figures 2 et 3 consiste en un parasol équipé d'un système de ventilation à énergie solaire, adapté pour rafraîchir les personnes se trouvant en dessous de ce parasol.

Ce parasol comporte, de façon classique, un manche 1 formé d'un tube creux, portant une toile de protection 2 solidarisée sur des tiges flexibles 3 et apte à se déployer sous l'effet de l'actionnement de baleines 4 articulées respectivement sur lesdites tiges, et sur un manchon 5 monté coulissant le long du manche 1.

En outre, le manche comporte, au niveau d'un tronçon de ce dernier situé entre la toile 2 et les baleines 4, dans une position déployée de celles-ci, six lumières longitudinales 6, d'une longueur de sensiblement 3 cm, régulièrement réparties autour de son axe longitudinal. Chacune de ces lumières 6 est destinée à loger une aiguille de roulement 7 de diamètre sensiblement supérieur à l'épaisseur de la paroi du manche 1.

Ce parasol comporte, de plus, des capteurs solaires 8 répartis sur la superficie de la toile 2. Ces capteurs 8 peuvent être de tout type connu en soi, et par exemple être sertis, cousus ou incorporés à la toile, ou encore consister en des capteurs souples formant des portions de toile solaires.

Ce parasol comprend, en outre, un moteur électrique 9 de trois ou six volts, associé ou non à un variateur de vitesse, et alimenté par les capteurs solaires 8. Ce moteur 9 est solidarisé sur l'extrémité du manche 1 dépassant, de façon classique, au-dessus de la toile 2.

Le moteur électrique 9 est agencé pour entraîner en rotation un arbre moteur 10 s'étendant axialement à l'intérieur du manche 1, sur une longueur de ce dernier supérieure a celle séparant son extrémité supérieure de son tronçon doté des lumières 6.

L'arbre moteur 10 porte, en outre, un arbre rotor 11 cylindrique, de diamètre sensiblement inférieur au diamètre interne du manche 1, et de longueur sensiblement inférieure à celle des lumières 6.

Cet arbre rotor 11 est solidarisé en rotation et en translation sur l'arbre moteur 10, de façon à se trouver en regard des lumières 6 du manche 1, et à venir au contact des aiguilles 7.

Par ailleurs, l'arbre moteur 10 est centré à l'intérieur du manche 1 au moyen de deux roulements 12, 13 de diamètre externe conjugué du diamètre interne dudit manche, disposés de part et d'autre de l'arbre rotor 11.

Le parasol comporte également un ventilateur comprenant, en premier lieu, une bague tournante 14 porte-pales disposée autour du manche 1 au contact des aiguilles 7, de façon à être entraînée en rotation par ces dernières. Cette bague tournante 14 est, en outre, associée à des moyens de blocage de sa translation par rapport au manche 1.

Ces moyens de blocage comprennent deux cages 15, 16 de roulement à billes disposées de part et d'autre de ladite bague, et deux bagues fixes 17, 18 solidaires du manche et encadrant les cages de roulement 15, 16. Ces bagues fixes 17, 18 et la bague tournante 14 présentent, en outre, des faces latérales conformées de façon à servir de surface de roulement pour les billes des cages 15, 16.

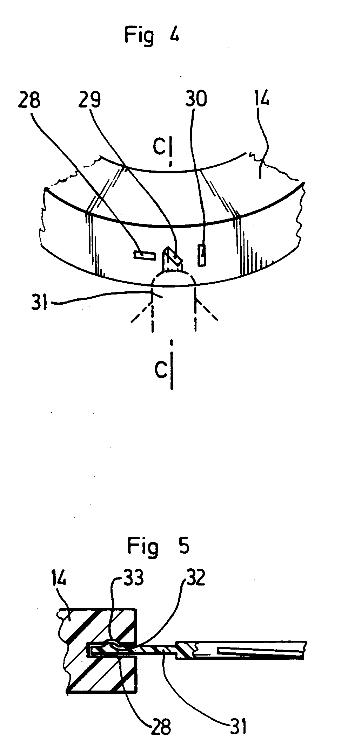

Le ventilateur comporte, de plus, des pales, soit du type repliable tel que représenté aux figures 2 et 3, soit du type démontable tel que représenté aux figures 4 et 5.

Dans le mode de réalisation représenté aux figures 2 et 3, la bague tournante 14 présente un décrochement annulaire en sous-face, agencé pour loger une couronne 19. Cette couronne 19 et la bague tournante 14 viennent en contact par des surfaces périphériques tronconiques aptes à éviter l'échappement vers le bas de ladite couronne.

La bague tournante 14 est, en outre, dotée de trois réservations 20 uniformément réparties autour de son axe et débouchant respectivement au droit du décrochement et au droit de la face périphérique de ladite bague.

La couronne 19 est elle-même dotée de trois crans 21 régulièrement répartis autour de son axe, de largeur sensiblement inférieure à celle des réservations 20 de la bague tournante 14.

Les pales 22 de ce ventilateur comportent, quant à elles, en premier lieu, un axe longitudinal 23 doté vers une de ses extrémités d'un bourrelet 24 de section conjuguée de celle des réservations 20 de la bague tournante 14 et de largeur inférieure à celle desdites réservations, ce bourrelet 24 étant, en outre, doté de deux doigts transversaux 25 lui conférant une longueur conjuguée de la largeur de ces réservations.

Chaque pale 22 comporte, en outre, un élément 26 formant pale, doté d'un alésage axial longitudinal apte à loger l'axe longitudinal 23, et des bagues à friction 27 disposées autour de l'axe 23 à l'intérieur de l'alésage, et adaptées pour permettre de modifier à volonté l'inclinaison des éléments de pales 26.

De telles pales 22 peuvent être amenées dans une position repliée par une simple rotation de la couronne 19, amenant les crans 21 de cette dernière en regard des réservations 20 de la bague tournante 14. Il est à noter que, dans cette position repliée, les doigts 25 du bourrelet restent en appui sur la couronne 19, empêchant le démontage des pales 22.

Le déploiement des pales 22 est quant à lui obtenu de manière très aisée, en inclinant le parasol vers le bas de façon à amener un basculement desdites pales, puis en obturant les réservations 20 par rotation de la couronne 19.

Dans le mode de réalisation représenté aux figures 4 et 5, la bague tournante 14 présente une face périphérique dotée, pour chaque pale, de plusieurs encoches 28, 29, 30 (au nombre de trois sur les figures) aptes à loger chacune l'extrémité d'une pale 31. Ces encoches 28-30 présentent des inclinaisons différentes par rapport à un axe vertical en vue d'obtenir une inclinaison des pales 31 variable selon l'encoche utilisée lors de sa mise en place.

Chaque pale 31 et chaque encoche 28-30 sont en outre dotées de moyens d'encliquetage, tel qu'un ergot 32 ménagé sur l'extrémité de la pale 31 et un siège 33 ménagé dans l'encoche, apte à loger ledit ergot et garantissant contre tout désassemblage accidentel.

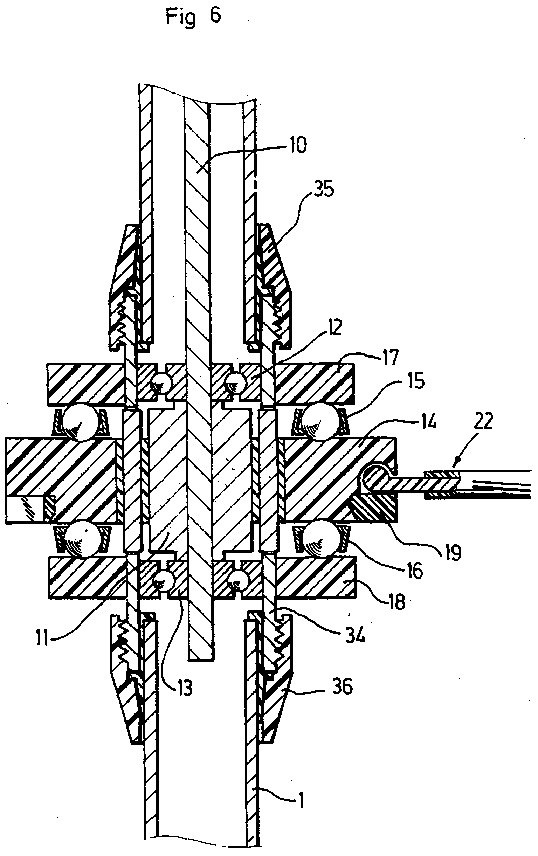

La figure 6 représente quant à elle un système de ventilation de conception identique à celui décrit en référence aux figures 2 et 3, adapté pour équiper un parasol traditionnel.

A cet effet, ce système de ventilation se présente sous la forme d'un kit d'assemblage comportant un moteur électrique, des capteurs solaires aptes à être solidarisés sur une toile de parasol, et un ensemble de ventilation représenté à la figure 6 (arbre moteur 10 ; arbre rotor 11 ; roulements 12, 13 ; bagues tournante 14 et fixes 17, 18 ; cages de roulement 15, 16 ; pales repliables 22) pré-assemblé sur un tronçon de tube 34 de diamètre sensiblement supérieur à celui d'un manche standard 1 de parasol, comportant vers chacune de ses extrémités, deux colliers de serrage 35, 36 permettant de l'interposer et de le fixer sur ledit manche après avoir coupé ce dernier.

La mise en place de ce système de ventilation consiste à découper le manche 1 du parasol à proximité de la toile 2, sur une longueur équivalant sensiblement à celle du tronçon de tube 34, à interposer ce tronçon de tube 34 entre les deux extrémités coupées de façon que l'arbre moteur 10 fasse saillie au-dessus de la toile 2, puis à mettre en place le moteur 9 et les capteurs 8.

Comme pour les parasols conçus d'origine avec le système de ventilation, ces opérations ne fragilisent en rien le parasol, le tronçon de tube assurant la continuité du manche.

## Revendications

1. Dispositif de protection tel qu'ombrelle ou parasol, comportant :
- un manche (1) portant une toile de protection (2) solidarisée sur des tiges flexibles (3) et apte à se déployer et se replier sous l'effet de l'actionnement de baleines (4) articulées respectivement sur lesdites tiges et sur un manchon (5) monté coulissant le long du manche (1),
- au moins un capteur (8) d'énergie solaire disposé sur la toile (2),
- un moteur électrique (9) relié à chaque capteur (8) en vue de son alimentation,
- et une hélice de ventilateur (14, 22 ; 14, 31) disposée sous la toile (2) et agencée pour être entraînée en rotation par le moteur électrique (9),
ledit dispositif de protection étant caractérisé en ce que :
. le moteur (9) est solidaire du manche (1) et adapté pour entraîner en rotation un arbre moteur (10) s'étendant au moins partiellement à l'intérieur dudit manche et comportant au moins un tronçon (11) présentant un diamètre externe sensiblement inférieur au diamètre interne de ce manche (1),
. le manche (1) est pourvu, dans une position intermédiaire entre la toile (2) et les baleines (4), dans la position déployée de ces dernières, et en regard du tronçon (11) de l'arbre moteur (10), de lumières (6) aptes à loger des organes d'entraînement (7) destinés à venir en contact avec ledit tronçon, de façon à être entraînés en rotation en sens inverse de ce dernier,
. l'hélice de ventilateur comporte une bague tournante (14) porte-pales, disposée autour du manche (1) en regard des organes d'entraînement (7), de façon à être entraînée en rotation par ces derniers, ladite bague étant associée à des moyens (15-18) de blocage de sa translation par rapport au manche (1),
. le moteur (9), l'arbre moteur (10), les organes d'entraînement (7) et la bague tournante (14) sont accouplés de façon à former une chaîne de transmission débrayable sous l'action d'une force déterminée tendant à s'opposer à la rotation de l'hélice.

2. Dispositif selon la revendication 1, caractérise en ce que :
- le tronçon (11) de l'arbre moteur (10), les organes d'entraînement (7) et la bague tournante (14) présentent des faces en regard présentant un état de surface adapté pour que l'entraînement en rotation desdits éléments soit du type positif,
- des moyens de débrayage sont disposés entre le moteur (9) et l'arbre moteur (10).

3. Dispositif selon la revendication 1, caractérisé en ce que les organes d'entraînement (7) sont constitués d'organes de roulement aptes à être entraînés en rotation par le tronçon (11), et à entraîner en rotation la bague tournante (14), sous l'effet des forces de frottement s'exerçant entre lesdits éléments.

4. Dispositif selon l'une des revendications 1 à 3, caractérisé en ce que le moteur (9) est fixé sur le manche (1) de façon à être disposé dans le prolongement d'un tronçon dudit manche s'étendant au-dessus de la toile (2), l'arbre moteur (10) étant logé entièrement à l'intérieur du manche (1).

5. Dispositif selon l'une des revendications précédentes, caractérisé en ce que le tronçon (11) de l'arbre moteur (10) est constitué d'un arbre rotor de dimensions adaptées pour pouvoir entraîner en rotation les organes d'entraînement (7), ledit arbre rotor (11) étant solidarisé en rotation et en translation sur l'arbre moteur (10).

6. Dispositif selon la revendication 5, caractérisé en ce que l'arbre moteur (10) est d'une longueur adaptée pour s'étendre dans le prolongement de l'arbre rotor (11), et se trouve centré à l'intérieur du manche (1) au moyen de deux roulements (12, 13) de diamètre externe conjuguée du diamètre interne dudit manche, disposés de part et d'autre de l'arbre rotor (11).

7. Dispositif selon la revendication 3, caractérisé en ce que les organes de roulement sont constitués d'aiguilles (7).

8. Dispositif selon l'une des revendications précédentes, caractérisé en ce que les moyens de blocage en translation de la bague tournante (14) comprennent deux cages (15, 16) de roulement à billes disposées de part et d'autre de ladite bague, et deux bagues fixes (17, 18) solidaires du manche (1), et encadrant les cages de roulement (15, 16), lesdites bagues tournante et fixes présentant des faces latérales aptes à servir de surface de roulement pour les billes d'une cage (15, 16).

9. Dispositif selon l'une des revendications précédentes, caractérisé en ce que le moteur électrique (9) est associé à un variateur de vitesse.

10. Dispositif selon l'une des revendications précédentes, caractérisé en ce que la bague tournante (14) est dotée de pales (22) articulées sur ladite bague de façon à pouvoir être amenées, soit dans une position où elles s'étendent radialement par rapport au manche (1), soit dans une position où elles s'étendent parallèlement le long dudit manche.

11. Dispositif selon la revendication 10, caractérisé en ce que chaque pale (22) comporte un axe longitudinal (23) articulé sur la bague tournante (14), un élément (26) formant pale doté d'un alésage longitudinal agencé pour loger l'axe (23), et des bagues à friction (27) disposées autour de l'axe (23), à l'intérieur de l'alésage, et aptes à permettre de faire tourner l'élément de pale (26) autour de son axe et de le maintenir dans toute position désirée.

12. Dispositif selon l'une des revendications 1 à 9, caractérisé en ce que la bague tournante (14) présente une face périphérique dotée d encoches (28-30) adaptées pour loger chacune une extrémité de pale (31), lesdites encoches et pales étant dotées de moyens d'encliquetage (32, 33) aptes à permettre un assemblage démontable.

13. Dispositif selon la revendication 11, caractérisé en ce que la bague tournante (14) présente, pour chaque pale (31), une pluralité d'encoches (28-30) d'inclinaisons différentes par rapport à un axe vertical, aptes à permettre de modifier l'inclinaison des pales (31).

14. Système de ventilation destiné à équiper un parasol ou une ombrelle, caractérisé en ce qu'il comprend :
. un tronçon de tube (34) de diamètre sensiblement supérieur à un diamètre standard de manche (1) de parasol ou d'ombrelle, ledit tronçon de tube (34) étant percé, sur une portion intermédiaire de sa longueur, de lumières (6) réparties autour de son axe, et comprenant deux colliers d'extrémité (35, 36) aptes à permettre de l'interposer le long d'un manche (1) de parasol, après découpe d'une longueur dudit manche équivalant à celle du tronçon de tube (34),
. préassemblés avec le tronçon de tube (34) :
- un arbre moteur (10) partiellement logé dans ledit tronçon de tube, et s'étendant dans le prolongement de ce dernier, ledit arbre moteur comportant, en regard des lumières (6), un tronçon (11) présentant un diamètre externe sensiblement inférieur au diamètre interne du tronçon de tube (34),
- des organes d'entraînement (7) logés dans les lumières (6) et destinés à venir en contact avec le tronçon (11) de l'arbre moteur (10),
- une hélice de ventilateur (14, 22 ; 14, 31) dotée d'une bague tournante (14) porte-pales disposée autour du tronçon de tube (34) en regard des organes d'entraînement (7), de façon à être entraînée en rotation par ces derniers,
- des moyens (15-18) de blocage en translation de la bague tournante (14) par rapport au tronçon de tube (34),
. un moteur électrique (9) apte à être monté sur l'arbre moteur (10) en vue de l'entraînement en rotation de ce dernier, lesdits moteur (9), arbre moteur (10), les organes d'entraînement (7) et la bague tournante (14) étant accouplés de façon à former une chaîne de transmission débrayable sous l'action d'une force déterminée tendant à s'opposer à la rotation de l'hélice,
. au moins un capteur (8) d'énergie solaire destiné à être fixé sur la toile du parasol ou de l'ombrelle, et apte à être relié électriquement au moteur (9).

## Claims

1. Protective device such as a sunshade or parasol, comprising:
- a handle (1) bearing a protective fabric (2) firmly attached to flexible rods (3) and capable of unfurling and folding up subject to the action of ribs (4) attached in articulated manner to said rods on the one hand and to a sleeve (5) mounted so as to slide along the handle (1) on the other hand,
- at least one solar panel (8) disposed on the fabric (2),
- an electric motor (9) connected to each panel (8) with a view to receiving energy therefrom,
- and a helical fan (14, 22; 14, 31) disposed beneath the fabric (2) and so arranged as to be driven in rotation by the electric motor (9),
said protective device being characterised in that:
. the motor (9) is firmly secured to the handle (1) and so designed as to drive in rotation a drive shaft (10) extending at least partly within said handle and comprising at least one section (11) having an outer diameter which is substantially smaller than the inner diameter of said handle (1),
. in an intermediate position between the fabric (2) and the ribs (4) the handle (1) is provided, in the unfurled position of said ribs and opposite the section (11) of the drive shaft (10), with channels (6) capable of accommodating drive elements (7) so designed as to come into contact with said section so as to be driven in rotation in the direction opposite to that of the latter,
. the helical fan comprises a blade-carrying rotary ring (14) disposed about the handle (1) opposite the drive element (7) so as to be driven in rotation by the latter, said ring being associated with means (15 - 18) for blocking its translational movement with respect to the handle (1),
. the motor (9), the drive shaft (10), the drive elements (7) and the rotary ring (14) are so connected as to form a transmission chain capable of being disengaged subject to a given force tending to oppose the rotation of the helix.

2. Device according to Claim 1, characterised in that:
- the section (11) of the drive shaft (10), the drive elements (7) and the rotary ring (14) possess opposite faces the surface condition of which is such as to ensure that the way in which said components are driven in rotation is of positive type,
- disengaging means are disposed between the motor (9) and the drive shaft (10).

3. Device according to Claim 1, characterised in that the drive elements (7) are constituted by roller elements so designed as to be driven in rotation by the section (11) and to drive the rotary ring (14) in rotation by the action of frictional forces between said components.

4. Device according to one of Claims 1 to 3, characterised in that the motor (9) is secured to the handle (1) so as to be disposed in extension of a section of said handle extending above the fabric (2), the drive shaft (10) being accommodated entirely within the handle (1).

5. Device according to one of the preceding claims, characterised in that the section (11) of the drive shaft (10) is constituted by a rotor shaft having dimensions such as to enable it to drive the drive elements (7) in rotation, said rotor shaft (11) being firmly attached to the drive shaft (10) when subject to rotation and when subject to translation.

6. Device according to Claim 5, characterised in that the length of the drive shaft (10) is such that it extends in extension of the rotor shaft (11) and is centred within the handle (1) by means of two bearings (12, 13) having an outer diameter which matches the inner diameter of said handle, said bearings being disposed on either side of the rotor shaft (11).

7. Device according to Claim 3, characterised in that the roller elements consist of needles (7).

8. Device according to one of the preceding claims, characterised in that the means for blocking translational movement of the rotary ring (14) comprise two ball-bearing cages (15, 16) disposed on either side of said ring as well as two fixed rings (17, 18) firmly connected to the handle (1) and framing the bearing cages (15, 16), said rotary and fixed rings having lateral faces so designed as to serve as a bearing surface for the balls of a cage (15, 16).

9. Device according to one of the preceding claims, characterised in that the electric motor (9) is associated with a speed variator.

10. Device according to one of the preceding claims, characterised in that the rotary ring (14) is provided with blades (22) attached in articulated manner to said ring so as to be capable of being moved either to a position in which they extend radially with respect to the handle (1) or to a position in which they extend parallel along said handle.

11. Device according to Claim 10, characterised in that each blade (22) comprises a longitudinal spindle (23) attached in articulated manner to the rotary ring (14), an element (26) constituting a blade provided with a longitudinal bore so designed as to accommodate the spindle (23), and friction rings (27) disposed about the spindle (23) within the bore and so designed as to make it possible to cause the blade element (26) to rotate about its spindle and maintain it in any desired position.

12. Device according to one of Claims 1 to 9, characterised in that the rotary ring (14) has a peripheral face provided with recesses (28 - 30) so designed that each of them can accommodate one end of a blade (31), said recesses and blades being provided with engaging means (32, 33) so designed as to be capable of dismantling.

13. Device according to Claim 11, characterised in that for each blade (31) the rotary ring (14) is provided with a plurality of recesses (28 - 30) having different inclinations with respect to a vertical axis, said recesses being so designed as to make it possible to change the inclination of the blades (31).

14. Ventilating system as equipment for a parasol or sunshade, characterised in that it comprises:
. a tubular section (34) having a diameter which is substantially larger than a standard diameter of a parasol or sunshade handle (1), said tubular section (34) being provided, along an intermediate portion of its length, with channels (6) distributed about its axis and comprising two end collars (35, 36), so designed as to enable said tubular section to be interposed along a handle (1) of the parasol after cutting away a length of said handle equivalent to that of said tubular section (34),
. preassembled with the tubular section (34):
- a drive shaft (10) partly accommodated within said tubular section and extending in extension of the latter, said drive shaft comprising, opposite the channel (6), a section (11) having an outer diameter which is substantially smaller than the inner diameter of the tubular section (34),
- drive elements (7) accommodated within the channels (6) and intended to come into contact with the section (11) of the drive shaft (10),
- a helical fan (14, 22; 14, 31) provided with a blade-carrying rotary ring (14) disposed about the tubular section (34) opposite the drive elements (7) so as to be driven in rotation by the latter,
- means (15 - 18) for blocking translational movement of the rotary ring (14) with respect to the tubular section (34),
. an electric motor (9) so designed as to be mounted on the drive shaft (10) with a view to driving the latter in rotation, said motor (9), motor shaft (10), drive elements (7) and rotary ring (14) being connected so as to form a transmission chain capable of being disengaged subject to the action of a given force tending to oppose the rotation of the helix,
. at least one solar panel (8) so designed as to be secured to the fabric of the parasol or sunshade and capable of being electrically connected to the motor (9).

## Patentansprüche

1. Schutzvorrichtung wie z.B. ein Sonnenschirm oder Parasol, umfassend:
- eine Griffstange (1) mit einem auf flexiblen Stäben (3) fest angebrachtem Schutzgewebe (2), das in der Lage ist, sich unter der Einwirkung von Führungselementen (4), die einerseits an den besagten Stäben und andererseits an einer verschiebbar entlang der Griffstange (1) angeordneten Hülse (5) angelenkt sind, zu entfalten bzw. zu falten,
- mindestens einen auf dem Gewebe (2) angeordneten Sonnenenergiekollektor (8),
- einen Elektromotor (9), der mit jedem der Kollektor (8) verbunden ist, so daß er von diesem mit Energie versorgt wird,
- und einen Schraubenlüfter (14, 22; 14, 31), der unterhalb des Gewebes (2) angeordnet und so beschaffen ist, daß er durch den Elektromotor (9) drehend angetrieben wird,
wobei die besagte Schutzvorrichtung dadurch gekennzeichnet ist:
. daß der Motor (9) fest mit der Griffstange (1) verbunden und so beschaffen ist, daß er eine Antriebswelle (10), die sich mindestens teilweise im Innern der besagten Griffstange erstreckt und mindestens einen Abschnitt (11) umfaßt, dessen Außendurchmesser erheblich geringer ist als der Innendurchmesser der besagten Griffstange (1), drehend antreibt,
. daß die Griffstange (1) in einer Zwischenlage zwischen dem Gewebe (2) und den Führungselementen (4) in der ausgefahrenen Lage der besagten Führungselemente und dem Abschnitt (11) der Antriebswelle (10) gegenüber mit Kanälen (6) versehen ist, die in der Lage sind, zwecks Kontaktes mit dem besagten Abschnitt Antriebselemente (7) aufzunehmen, wobei die besagten Azitriebselemente so beschaffen sind, daß sie in entgegengesetzter Richtung zu der Drehrichtung des besagten Abschnitts drehend angetrieben werden,
. daß der Schraubenlüfter einen FlügeltragDrehring (14) umfaßt, der den Antriebselementen (7) gegenüber rings um die Griffstange (1) angeordnet ist, so daß der besagte Drehring durch die besagten Antriebselemente drehend angetrieben wird, und zwar steht der besagte Ring mit Mitteln (15 - 18) in Verbindung, die dessen Translation im Verhältnis zu der Griffstange (1) verhindern,
. daß der Motor (9), die Antriebswelle (10), die Antriebselemente (7) und der Drehring (14) so miteinander verbunden sind, daß sie eine Übertragungskette bilden, die unter Einwirkung einer gegebenen Kraft mit der Tendenz der Schraubendrehung entgegenzuwirken, entkuppelt werden kann.

2. Vorrichtung nach Anspruch 1, dadurch gekennzeichnet:
- daß der Abschnitt (11), der Antriebswelle (10), die Antriebselemente (7) und der Drehring (14) gegenüberliegende Flächen aufweisen, deren Oberflächenzustand so beschaffen ist, daß der drehende Antrieb der besagten Teile kraftschlüssiger Art ist,
- daß die Entkuppelungsmittel zwischen dem Motor (9) und der Antriebswelle (10) angeordnet sind.

3. Vorrichtung nach Anspruch 1, dadurch gekennzeichnet, daß die Antriebselemente (7) Wälzelemente sind, die sich zu drehendem Antrieb durch den Abschnitt (11) eignen und in der Lage sind, den Drehring (14) unter Einwirkung der auf die besagten Teile ausgeübten Reibungskräfte drehend anzutreiben.

4. Vorrichtung nach einem der Ansprüche 1 bis 3, dadurch gekennzeichnet, daß der Motor (9) so an der Griffstange (1) angebracht ist, daß er sich in der Verlängerung eines Abschnitts der besagten Griffstange befindet, wobei sich die besagte Verlängerung oberhalb des Gewebes (2) erstreckt, während die Antriebswelle (10) vollkommen im Innern der Griffstange (1) angeordnet ist.

5. Vorrichtung nach einem der vorstehenden Ansprüche, dadurch gekennzeichnet, daß der Abschnitt (11) der Antriebswelle (10) aus einer Rotorwelle besteht, deren Abmessungen so beschaffen sind, daß die besagte Rotorwelle die Antriebselemente (7) drehend antreiben kann, wobei die besagte Rotorwelle (11) sowohl in Drehung als auch in Translation fest an der Antriebswelle (10) angebracht ist.

6. Vorrichtung nach Anspruch 5, dadurch gekennzeichnet, daß die Länge der Antriebswelle (10) so beschaffen ist, daß sie sich in der Verlängerung der Rotorwelle (11) erstreckt und im Inneren der Griffstange (1) durch zwei Wälzlager (12, 13) zentriert ist, wobei der Außendurchmesser der besagten Lager dem besagten Innendurchmesser der besagten Griffstange entspricht und die besagten Wälzlager zu der einen und zu der anderen Seite der Rotorwelle (11) angeordnet sind.

7. Vorrichtung nach Anspruch 3, dadurch gekennzeichnet, daß die Wälzelemente aus Nadeln (7) bestehen.

8. Vorrichtung nach einem der vorstehenden Ansprüche, dadurch gekennzeichnet, daß die Mittel (14) zum Blockieren der Translation des Drehrings zwei Kugellagerkäfige (15, 16) umfassen, die zu der einen und zu der anderen Seite des besagten Ringes angeordnet sind, sowie zwei fest angebrachte Ringe (17, 18), die fest mit der Stange (1) verbunden sind und die Kugellagerkäfige (15, 16) umrahmen, wobei die besagten Drehringe und die besagten fest angebrachten Ringe Seitenflächen aufweisen, die in der Lage sind, für die Kugeln eines Käfigs (15, 16) als Abwälzoberflächen zu dienen.

9. Vorrichtung nach einem der vorstehenden Ansprüche, dadurch gekennzeichnet, daß der Elektromotor (9) mit einem Regelantrieb in Verbindung steht.

10. Vorrichtung nach einem der vorstehenden Ansprüche, dadurch gekennzeichnet, daß der Drehring (14) mit Flügeln (22) versehen ist, die so an dem besagten Ring angelenkt sind, daß sie entweder in eine Lage gebracht werden können, in der sie sich im Verhältnis zu der Griffstange (1) radial erstrecken, oder in eine Lage, in der sie sich parallel zu der Längsrichtung der besagten Griffstange erstrecken.

11. Vorrichtung nach Anspruch 10, dadurch gekennzeichnet, daß jeder Flügel (22) eine an dem Drehring (14) angelenkte Längsspindel (23) umfaßt, sowie ein einen Flügel bildendes Teil (26), das mit einer Längsbohrung zur Aufnahme der Spindel (23) versehen ist, und Reibringe (27), die rings um die Spindel (23) im Innern der Bohrung angeordnet und mit deren Hilfe es möglich ist, das Flügelteil (26) rings um dessen Achse in Drehung zu versetzen und in jeder gewünschten Lage zu erhalten.

12. Vorrichtung nach einem der Ansprüche 1 bis 9, dadurch gekennzeichnet, daß der Drehring (14) eine mit Aussparungen (28 - 30) versehene Umfangsfläche aufweist, wobei die besagten Aussparungen so beschaffen sind, daß jede davon ein Flügelende (31) aufnimmt, und zwar sind die besagten Aussparungen und Flügel mit Eingriffmitteln (32, 33) versehen, mit deren Hilfe demontierbarer Zusammenbau möglich ist.

13. Vorrichtung nach Anspruch 11 , dadurch gekennzeichnet, daß der Drehring (14) für jeden Flügel (31) eine Mehrzahl von Aussparungen (28 - 30) aufweist, deren Neigunswinkel im Verhältnis zu einer senkrechten Achse unterschiedlich sind und mit deren Hilfe es möglich ist, die Neigung der Flügel (31) zu ändern.

14. Belüftungssystem zur Ausrüstung eines Parasols oder Sonnenschirms, dadurch gekennzeichnet, daß es folgende Teile umfaßt:
. einen rohrförmigen Abschnitt (34) mit einem Durchmesser, der erheblich größer ist als ein Standarddurchmesser der Griffstange (1) eines Parasols bzw. Sonnenschirms, wobei der besagte rohrförmige Abschnitt (34) innerhalb eines Zwischenabschnitts seiner Länge mit rings um seine Achse verteilten Langlöchern (6) versehen ist und zwei Endkrägen (35, 36) umfaßt, mit deren Hilfe der besagte rohrförmige Abschnitt entlang einer Griffstange (1) des Parasols eingefügt werden kann, nachdem ein Stück der besagten Griffstange abgeschnitten wurde, dessen Länge der des rohrförmigen Abschnitts (34) entspricht,
. mit dem rohrförmigen Abschnitt (34) vormontiert:
- eine Antriebswelle (10), die teilweise innerhalb des besagten rohrförmigen Abschnitts angeordnet ist und sich in der Verlängerung des besagten rohrförmigen Abschnitts erstreckt, wobei die besagte Antriebswelle den Bohrlöchern (6) gegenüber einen Abschnitt (11) umfaßt, dessen Außendurchmesser erheblich geringer ist als der Innendurchmesser des rohrförmigen Abschnitts (34),
- Antriebselemente (7) in den Bohrlöchern (6), die so beschaffen sind, daß sie mit dem Abschnitt (11) der Antriebswelle (10) in Kontakt kommen,
- einen Schraubenlüfter (14, 22; 14, 31) mit einem Flügeltrag-Drehring (14), der den Antriebselementen (7) gegenüber rings um den rohrförmigen Abschnitt (34) angeordnet ist, so daß der besagte Drehring durch die besagten Antriebselemente drehend angetrieben wird,
- Mittel (15 - 18) zum Blockieren der Translation des Drehrings (14) im Verhältnis zu dem rohrförmigen Abschnitt (34),
. einen Elektromotor (9), der zur Anordnung auf der Antriebswelle (10) zwecks drehenden Antriebs der besagten Welle geeignet ist, wobei der besagte Motor (9), die besagte Antriebswelle (10), die besagten Antriebselemente (7) und der besagte Drehring (14) so miteinander verbunden sind, daß sie eine Übertragungskette bilden, die unter Einwirkung einer gegebenen Kraft mit der Tendenz der Schraubendrehung entgegenzuwirken entkuppelt werden kann,
. mindestens einen Sonnenenergiekollektor (8) zur Anbringung auf dem Gewebe des Parasols oder Sonnenschirmes, der sich elektrisch an den Motor (9) anschließen läßt.
